**Europäisches Patentamt**

**European Patent Office**

**Office européen des brevets**

(19)

(11) Veröffentlichungsnummer: **0 184 007 B1**

(12) **EUROPÄISCHE PATENTSCHRIFT**

(45) Veröffentlichungstag der Patentschrift:
28.12.88

(51) Int. Cl.⁴: **B 23 F 23/10,** B 23 F 9/10, B 23 F 15/06

(21) Anmeldenummer: 85114080.6

(22) Anmeldetag: **05.11.85**

(54) Verzahnungsmaschine zum Schneiden von Spiralkegelrädern und Stirnzahnkupplungen nach dem kontinuierlichen Schneidverfahren.

(30) Priorität: **23.11.84 CH 5603/84**

(43) Veröffentlichungstag der Anmeldung:
**11.06.86 Patentblatt 86/24**

(45) Bekanntmachung des Hinweises auf die Patenterteilung:
**28.12.88 Patentblatt 88/52**

(84) Benannte Vertragsstaaten:
**CH DE FR GB IT LI SE**

(56) Entgegenhaltungen:
**EP-A- 0 059 992**
**CH-A- 271 703**
**US-A- 3 971 293**

**K.F. KECK: "DIE ZAHNRADPARXIS", Teil II:
"Schrägzahn-Stirnräder, Geradzahn- und
Spiral-Kegelräder", 1958, R. OLDENBURG, München,
DE
G. HENRIOT: "TRAITE THEORIQUE ET PRATIQUE DES
ENGRENAGES", Band II:
"Fabrication-Contrôle-Lubrification-Traitement
Thermique", 1972, Dunod, Paris, FR**

(73) Patentinhaber: **Werkzeugmaschinenfabrik
Oerlikon-Bührle AG, Birchstrasse 155, CH-8050 Zürich
(CH)**

(72) Erfinder: **Kotthaus, Erich, Schmittenackerstrasse 18,
D-8304 Wallisellen (DE)**

## Beschreibung

Die Erfindung bezieht sich auf eine Verzahnungsmaschine zum Schneiden von Spiralkegelrädern und Stirnzahnkupplungen mit zykloidenförmigen Zahnlängskurven nach dem kontinuierlichen Schneidverfahren nach dem Oberbegriff des Patentanspruchs 1; siehe EP-A 0 059 992.

Aus der CH-A 271 703 sind Verfahren zum Schneiden von Kegelzahnrädern mit gekrümmten Zähnen nach dem kontinuierlichen Schneidverfahren bekannt, nach denen bei gleichlaufenden und bei gegenlaufenden Drehrichtungen von Werkzeug und ideellem Plankegelrad die Exzentrizität der Werkzeugachse in Bezug auf die Hauptachse der Maschine sich nach unterschiedlichen Formeln bestimmen lässt. Weiter werden Messerköpfe offenbart, bei denen bei gleichlaufenden und bei gegenlaufenden Drehrichtungen von Werkzeug und Planrad die Grösse des Orientierungswinkels der Messer des Werkzeuges sich ebenfalls aus unterschiedlichen Formeln bestimmen lässt.

Somit ist bekannt, dass mit dem kontinuierlichen Schneidverfahren Zahnräder sowohl mit epizykloidenförmigen Zahnlängskurven durch gegenlaufendes Rotieren von Werkstück und Werkzeug, auch Gegenlaufschneiden genannt, wie auch hypozykloidenförmige Zahnlängskurven durch gleichlaufendes Rotieren von Werkstück und Werkzeug, auch Gleichlaufschneiden genannt, erzeugt werden können.

In der Praxis hat sich jedoch zur Herstellung von Kegelrädern nach dem kontinuierlichen Schneidverfahren nur das Gegenlaufschneiden durchgesetzt, welches auf der Erzeugung einer verlängerten Epizykloide basiert. Dabei sind Werkstück- und Werkzeugspindeln mit gegenlaufenden Drehrichtungen durch einen Getriebezug mechanisch gekoppelt und von einem einzigen Motor angetrieben, siehe zum Beispiel EP 0 059 992 A1. Um beim Schneiden ein Flattern im Getriebezug zu vermindern, hervorgerufen durch das intermittierende Schnittdrehmoment und damit zusammenwirkend durch das Getriebespiel, wird auf die Werkstückspindel ein Bremsdrehmoment ausgeübt, üblicherweise mit mechanischen oder hydraulischen Bremsvorrichtungen. Dieses beim Gegenlaufschneiden kontrollierbare Problem verschärft sich jedoch beim Gleichlaufschneiden derart, dass die Herstellung von Kegelrädern mit hypozykloidenförmigen Zahnlängskurven bisher unterblieb.

Weiter ist aus der DE-B 1 056 453 eine Walzfräsmaschine bekannt, mit einem Getriebezug zwischen Werkzeug und Werkstück und einem einen Schneckenradkranz aufweisenden Rundtisch (Werkstückträger), wobei der Tisch zwischen einer mit dem Schneckenradkranz kämmenden ersten Schnecke und einer zweiten mit dem Schneckenradkranz kämmenden und ihn antreibenden Schnecke spielfrei drehbar gehalten ist, indem die erste Schnecke das Ende des Getriebezuges zwischen Werkzeug und Werkstück bildet und die Drehung des Rundtisches nur freigibt ohne ihn anzutreiben, während der Antrieb der zweiten Schnecke von einem ausserhalb des Getriebezuges Werkzeug und Werkstück liegenden Antriebspunkt abgezweigt ist. Vorzugsweise werden dabei die erste und die zweite Schnecke von getrennten Motoren, z.B. Öl- oder Elektromotoren, angetrieben.

Ferner ist aus der DE-A 2 611 544 A1 bzw. US-A 3 971 293 eine Maschine zum Verzahnen von Zahnrädern nach dem Abwälzverfahren bekannt, wobei eine Messerkopfspindel in einer Wälztrommel gelagert ist und von einem ersten Antrieb angetrieben wird, die Wälztrommel und eine Werkstückspindel durch einen Abwälzgetriebezug miteinander in zeitlicher Abhängigkeit verbunden sind und von einem dazwischen angeordneten zweiten Antrieb simultan und in mindestens einer Drehrichtung angetrieben werden und ein den Abwälzgetriebezug in derselben Drehrichtung wie der zweite Antrieb antreibender dritter Antrieb bei der Werkstückspindel angeordnet ist. Dadurch wird beim Abwälzfräsen der Abwälzgetriebezug verspannt gehalten.

Bekannte Verzahnungsmaschinen zum Schneiden von Spiralkegelrädern mit epizykloidenförmigen Zahnlängslinien nach dem kontinuierlichen Schneidverfahren sind in Baureihen zusammengefasst, um Kleinkegelräder von einigen Millimetern bis Grosskegelräder von einigen Metern Durchmesser mit epizykloidenförmigen Zahnlängskurven herzustellen. Dabei wird der Anwendungsbereich dieser Maschinen nach dem Tellerraddurchmesser bestimmt, welcher in erster Linie davon abhängig ist, wie weit sich der Messerkopf auf der Maschine exzentrisch zur Maschinenachse bzw. zur Wälztrommelachse einstellen lässt. Die grösste Exzentrizität wiederum ist zum grössten Teil verantwortlich für die Wälztrommelgrösse und damit mitbestimmend für die eigentlichen Maschinendimensionen. Sollten nun Kegelradgrössen hergestellt werden, welche den Anwendungsbereich bzw. den Arbeitsbereich einer bestimmten Maschinengrösse übersteigen, können wirtschaftliche Überlegungen, z.B. kleiner Markt etc., den Bau einer entsprechend grösseren Verzahnungsmaschine und damit die Herstellung dieser grösseren Kegelräder in Frage stellen.

Die Aufgabe besteht darin, die Herstellung von Kegelrädern, welche den bisher vorgegebenen Arbeitsbereich einer bestehenden Verzahnungsmaschine übersteigen, auf wirtschaftliche Weise zu ermöglichen.

Die in Anspruch 1 aufgezeigte Lösung begründet sich auf der Erkenntnis, dass bei Durchführung von einfachen Modifikationen an bekannten Maschinen, der grösste zulässige Tellerraddurchmesser auf einer bestimmten Maschinengrösse wesentlich erhöht werden kann, wenn zusätzlich Zahnräder mit hypozykloidenförmigen Zahnlängskurven hergestellt werden, weil bei gegebenem, maximalem Maschinen-Exzentrizitätsabstand der zulässige Raddurchmesser beim Schneiden nach einer Hypozykloide wesentlich grösser ist, als beim Schneiden nach einer Epizykloide.

Nachfolgend wird anhand von Zeichnungen ein Ausführungsbeispiel der Erfindung erläutert. Es zeigt:

Fig. 1 schematisch die beim kontinuierlichen Schneidverfahren nach verlängerter Epizykloide entstehenden Zahnlängslinien auf einem indeellen Planrad,

Fig. 2 schematisch wie Fig. 1, jedoch nach verlängerter Hypozykloide,

Fig. 3 ein Getriebeschema einer Maschine.

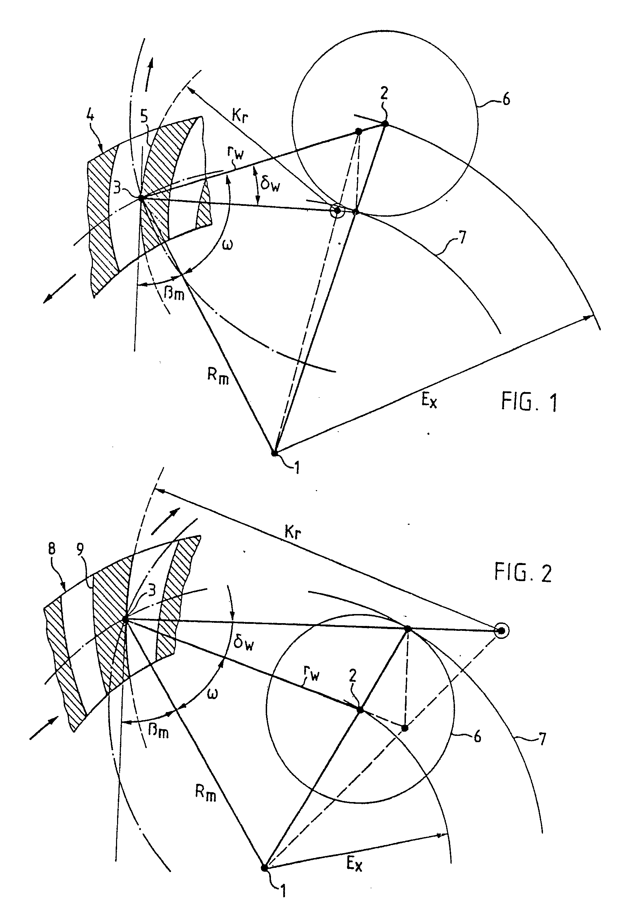

Fig. 1 und 2 zeigen die an sich bekannten Zusammenhänge zwischen Planrad und Messerkopf beim kontinuierlich bzw. pausenlos arbeitenden Verzahnungs-Schneidverfahren.

In Fig. 1 entstehen Zahnlängslinien 5 eines Planrades 4 als Ausschnitte von verlängerten Epizykloiden, also durch schlupffreies Abrollen eines Rollkreises 6 auf einem Grosskreis 7 bzw. eines Punktes auf dem verlängerten Rollkreisradius. Dabei bilden ein Planradius $R_m$, ein Messerradius $r_w$ und ein Exzentrizitätsabstand $E_x$ ein Dreieck, dessen Eckpunkte durch ein Planradzentrum 1, das mit dem Grosskreiszentrum zusammenfällt, ein Messerkopfzentrum 2, das mit dem Rollkreiszentrum zusammenfällt, und einen Berechnungspunkt 3 gegeben sind. Der Berechnungspunkt 3 entspricht einem Punkt auf der Zahnlängslinie 5, der durch einen Punkt auf der Schneide eines nicht dargestellten Messers des ebenfalls nicht dargestellten Messerkopfes geschnitten wird. Die Bewegungsrichtungen des Messerkopfes und des Planrades sind durch Pfeile gekennzeichnet. Weitere an sich bekannte Grössen sind ein Hilfswinkel $\omega$, ein Spiralwinkel $\beta_m$, ein Orientierungswinkel $\delta_w$, und ein an den Berechnungspunkt 3 der Zykloide angelegten Krümmungsradius $K_r$, mit dem zur Vereinfachung die Zykloide als Kreisbogen dargestellt ist.

Das in Fig. 2 dargestellte Planrad 8 weist Zahnlängslinien 9 auf, welche durch Ausschnitte von verlängerten Hypozykloiden gebildet werden, d.h. der Rollkreis 6 rollt innerhalb des Grosskreises 7 ab. Bei beiden Figuren wurden zur Verdeutlichung der sich ergebenden Unterschiede das Planrad und der Messerkopf, d.h. die Bezeichnung $R_m$ und $r_w$ gleich gross gewählt. Ebenso wurden die gleichen Bezugsziffern für die gleichen Bezeichnungen verwendet. Im Vergleich von Fig. 1 und 2 ist deutlich zu erkennen, dass bei gleich grossen $R_m$ und $r_w$ der Wert $E_x$ in Fig. 2 wesentlich kleiner ist. Daraus kann abgeleitet werden, dass der maximal zulässige Radgrössenbereich, bestimmt durch den Planradradius $R_m$ bei gegebenem maximalem Exzentrizitätsabstand $E_x$ einer gegebenen Schneidmaschine, wesentlich vergrössert wird, wenn neu nach der verlängerten Hypozykloide geschnitten wird.

Im weiteren wird der Krümmungsradius $K_r$ grösser, d.h. es entstehen gestrecktere Zähne in Längsrichtung, sowie die Drehrichtung von Werkstück oder Werkzeug wird geändert, sodass sich in der Praxis ein Gleichlaufschneiden von Werkzeug und Werkstück ergibt.

Aus der bekannten Formel:

$$E_x = \sqrt{R_m^2 + r_w^2 - 2 R_m r_w \cos \omega}$$

ergibt sich abgeleitet:

$$R_m = r_w \cos \omega + \sqrt{E_x^2 - r_w^2 + (r_w \cos \omega)^2}$$

Diese Formeln sind wichtig für die Bestimmung des Arbeitsbereiches einer Verzahnungsmaschine.

Geht man beispielsweise aus von
einem Normalmodul $m_n = 8,5$,
einem mittleren Spiralwinkel $\beta_m = 30°$,
einem Messerkopfradius $r_w = 160$ mm,
einer Messergruppenzahl $Z_w = 13$,
einem Exzentrizitätsabstand $E_x = 270$ mm und
einem $\delta_w = 20,20°$,
dann ergeben sich nach der $R_m$-Formel folgende Werte:

| | Epizykloide | Hypozykloide |
|---|---|---|
| Winkel $\omega$ | 80,20° | 39,80° |
| $R_m$ max. | 246,42 mm | 372,65 mm |
| Zulässiger max. Raddurchmesser (Aussen-$do_2$) ca. | 575 mm | 870 mm |

wobei $\omega = 90° - \beta_m + \delta_w$ für Epizykloide, jedoch $\omega = 90° - \beta_m - \delta_w$ für Hypozykloide beträgt.

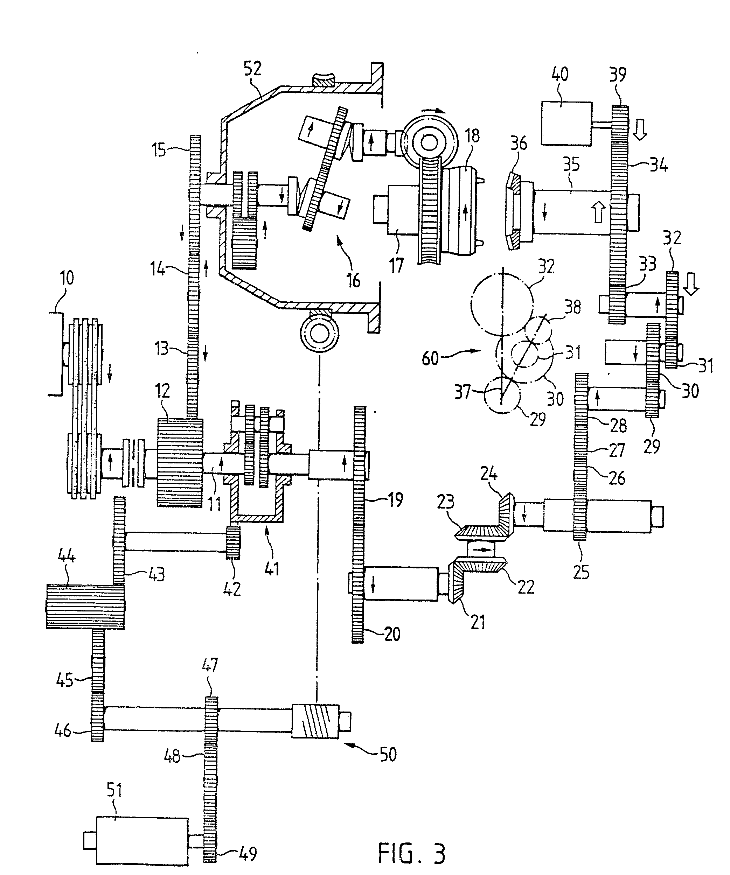

Die erfindungsgemässen Änderungen, welche an einer bekannten Verzahnungsmaschine zum wahlweisen Einstellen für das Schneiden einer Epi- oder Hypozykloide vorzunehmen sind, sind aus Fig. 3 ersichtlich, in welcher zur Vereinfachung Wechselgetriebe im Hauptantrieb- und Abwälzgetriebezug weggelassen sind. Ein Hauptantrieb 10, z.B. ein umschaltbarer Elektromotor, treibt über ein Riementrieb und eine Kupplung eine Welle 11 an, auf der eine Verzweigungsstelle in einem ersten Getriebezug zugeordnet ist. Der erste Getriebezug verbindet die Welle 11 einerseits über die Zahnräder 12,13,14 und 15 sowie das Getriebe 16 mit einer ersten Spindel 17 und andererseits, z.B. ohne ein dargestelltes Ausgleichsgetriebe 41, über die Zahnräder 19 bis 34 mit einer zweiten Spindel 35. In dieser Ausführung sind auf der ersten Spindel 17 ein Messerkopf 18 als Werkzeug und auf der zweiten Spindel 35 ein Werkstück 36 angebracht, wobei die Drehrichtungen der beiden Spindeln gegenlaufend sind, siehe ausgefüllte Pfeile bei den Rädern oder auf den Wellen. Dieser Zustand stellt den Stand der Technik dar, d.h. es werden Zahnräder mit verlängerten Epizykloiden geschnitten. Zum Schneiden von Zahnrädern mit verlängerten Hypozykloiden ist der Drehsinn, bei8spielsweise an der zweiten Spindel 35 zu ändern, siehe unausgefüllte Pfeile. Dazu werden die Zahnräder 30 und 31, wie in einer Umklappung dargestellt, auf einer stark strichpunktiert dargestellten Schere 37 befestigt und durch ein zusätzliches Zwischenrad 38, durch welches nun die Drehrichtungen der Räder 32, 33 und 34 gekehrt werden, ergänzt. Diese Änderung im ersten Getriebezug wird nun als Umkehrgetriebe 60 bezeichnet. Um nun das durch das Gleichlaufschneiden auftretende starke Flattern im ersten Getriebezug zu eliminieren, wird zusätzlich ein Hilfsantrieb 40 in der Nähe der zweiten Spindel 35. d.h. hier über ein Zahnrad 39, an den ersten Getriebezug angeschlossen. Dieser Hilfsantrieb 40 wirkt in gleicher Drehrichtung auf die Spindel 35 wie der Hauptantrieb 10 und hält den ersten Getriebezug zwischen der zweiten Spindel 35 und dem Hauptantrieb 10 verspannt. An einer nicht dargestellten Steuerung des Hilfsantriebes 40 wird das erforderliche Drehmoment, zur Erhaltung der Verspannung des Getriebezuges bei den Arbeitsdrehungen von Messerkopf und Werkstück, entsprechend der jeweils maximal erwarteten Leistungsaufnahme des Hauptantriebes 10 eingestellt.

Der beschriebene Ablauf gemäss Fig. 3 bezieht sich auf das Schneiden nach dem kontinuierlichen Verfahren ohne einen Abwälzvorgang. Verzahnungsmaschinen, mit denen wahlweise auch Abwälzvorgänge durchgeführt werden können, weisen eine Wälztrommel 52 auf, mit darin angeordnetem Getriebe 16 und erster Spindel 17, und haben z.B. an einer Verbindungsstelle bei der Welle 11 ein Ausgleichsgetriebe 41 zum Verbinden eines zweiten Getriebezuges mit dem ersten Getriebezug. Der zweite Getriebezug wird von einem umschaltbaren Wälzantrieb 51, z.B. ein Elektro- oder Hydromotor, angetrieben und verbindet die Wälztrommel 52 über ein Schneckengetriebe 50 und Zahnräder 42 bis 49 mit dem Ausgleichsgetriebe 41. Wie an sich bekannt, wird dadurch wahlweise auf die zweite Spindel 35 eine überlagerte Drehbewegung übertragen, welche gleich- oder gegenlaufend zu derjenigen der zweiten Spindel 35 sein kann. Das dabei auf die Spindel 35 wirkende zusätzliche Drehmoment ist jedoch vernachlässigbar und das Getriebespiel im zweiten Getriebezug wirkt sich in beiden Drehrichtungen nicht nachteilig auf den ersten Getriebezug aus.

Mit Vorteil kann ein umschaltbarer Hilfsantrieb 40 auch zur Erzeugung eines Bremsdrehmomentes an der zweiten Spindel 35 beim Schneiden nach verlängerten Epizykloiden eingesetzt werden, indem sein Drehmoment nun gegensinnig zum Drehmoment des Hauptantriebes 10 an der Spindel 35 angreift, d.h. der erste Getriebezug wird nun auf den anderen Zahnflanken, den Zugflanken, in Anlage gehalten. Die bisher üblichen Bremsvorrichtungen mechanischer oder hydraulischer Art können dadurch entfallen.

Antriebssysteme, wie hier zur Verwendung als Hilfsantrieb 40 vorgeschlagen, sind z.B. als Vorschubantriebe bekannt und enthalten beispielsweise eine Thyristorschaltung und einen Gleichstrommotor. Sie sind geeignet zur Abgabe eines einstellbaren, konstanten, positiven oder negativen Drehmomentes bis zu einer zulässigen Höchstdrehzahl.

**Patentansprüche**

1. Verzahnungsmaschine zum Schneiden von Spiralkegelrädern und Stirnzahnkupplungen mit zykloidenförmigen Zahnlängskurven nach dem kontinuierlichen Schneidverfahren enthaltend eine rotierende erste Spindel (17) und eine rotierende zweite Spindel (35) zum Aufspannen eines Messerkopfes (18) und eines Werkstückes (36), wobei jede Spindel ein drehfestes Zahnrad aufweist, einen ersten Getriebezug, welcher die erste und die zweite Spindel (17, 35) zum kontinuierlichen Drehen der ersten und der zweiten Spindel (17 und 35) verbindet und einen umschaltbaren Hauptantrieb (10), verbunden mit dem ersten Getriebezug zum gleichzeitigen Antreiben der ersten und der zweiten Spindel (17, 35), gekennzeichnet durch ein Umkehrgetriebe (60) im ersten Getriebezug zum wahlweisen Umschalten für gegenlaufende Drehrichtungen der ersten und der zweiten Spindel (17 und 35) zum Schneiden von epizykloidenförmigen Zahnlängskurven und gleichlaufende Drehrichtungen der ersten und der zweiten Spindel (17 und 35) zum Scheiden von hypozykloidenförmigen Zahnlängskurven, wobei bei gegebenem maximalen Exzentrizitätsabstand (Ex) einer Verzahnungsmaschine sich grössere maximal zulässige Planradradien (Rm) bzw. Arbeitsbereiche der Verzahnungsmaschine für Zahnräder mit hypozykloidenförmigen als mit epizykloidenförmigen Zahnlängskurven ergeben, nach der Formel:

$$R_m = r_w \cos \omega + \sqrt{E_x^2 - r_w^2 + (r_w \cos \omega)^2}$$

mit $r_w$ = Messerkopfradius,
$\beta_m$ = Spiralwinkel,
$\delta_w$ = Orientierungswinkel
wobei für Epizykloide $\omega = 90° - \beta_m + \delta_w$
und für Hypozykloide $\omega = 90° - \beta_m - \delta_w$
beträgt, und
einen umschaltbaren Hilfsantrieb (40), angeschlossen an den ersten Getriebezug direkt am drehfesten Zahnrad (34) der zweiten Spindel (35) und diese simultan mit dem Hauptantrieb (10) antreibend zum Verspannen des ersten Getriebezuges.

2. Verzahnungsmaschine nach Anspruch 1, dadurch gekennzeichnet, dass das Umkehrgetriebe (60) in der Nähe der zweiten Spindel (35) angeordnet ist.

3. Verzahnungsmaschine nach Anspruch 1, dadurch gekennzeichnet, dass der erste Getriebezug eine Verzweigungsstelle aufweist, an der der Hauptantrieb (10) angeschlossen ist, und dass die erste Spindel (17) an dem einen und die zweite Spindel (35) an dem anderen Ende des ersten Getriebezuges angeordnet sind.

4. Verzahnungsmaschine nach Anspruch 1, enthaltend folgende zusätzliche Merkmale:
   - eine Wälztrommel (52), in welcher die erste Spindel (17) angeordnet ist,
   - einen zweiten Getriebezug, welcher die Wälztrommel (52) über ein Ausgleichsgetriebe (41) mit dem ersten Getriebezug verbindet und dadurch eine überlagerte Abwälzbewegung auf die zweite Spindel (35) überträgt und einen umschaltbaren Wälzantrieb (51), welcher mit dem zweiten Getriebezug verbunden ist, zum wahlweisen Zuschalten der Abwälzbewegung.

5. Verzahnungsmaschine nach Anspruch 1 oder 4, dadurch gekennzeichnet, dass das Umkehrgetriebe (60) für gleichlaufende Drehrichtungen der ersten und der zweiten Spindel (17 und 35) geschaltet ist und Hauptantrieb (10) und Hilfsantrieb (40) den ersten Getriebezug in gleicher Drehrichtung antreiben zum Schneiden von hypozykloidenförmigen Zahnlängskurven.

6. Verzahnungsmaschine nach Anspruch 1 oder 4, dadurch gekennzeichnet, dass das Umkehrgetriebe (60) für gegenlaufende Drehrichtungen der ersten und der zweiten Spindel (17 und 35) geschaltet ist und Hauptantrieb (10) und Hilfsantrieb (40) den ersten Getriebezug in entgegengesetzter Drehrichtung antreiben zum Schneiden von epizykloidenförmigen Zahnlängskurven.

## Revendications

1. Machine à tailler l'engrenage de roues coniques à denture spirale et d'embrayage à denture frontale à courbe longitudinale de dent en forme de cycloïde, selon le procédé de taille en continu, machine comportant une première broche rotative (17) et une seconde broche rotative (35) pour recevoir l'une, la tête porte-couteaux (18) et l'autre, une pièce (36), chaque broche ayant une roue dentée solidaire en rotation, un premier train d'engrenage qui relie la première et la seconde broche (17, 35) pour la rotation en continu de la première et de la seconde broche (17 et 35) ainsi qu'un moyen d'entraînement principal (10) réversible, relié au premier train d'engrenage pour entraîner en même temps la première et la seconde broche (17, 35), machine caractérisée par une transmission d'inversion (60) prévue dans le premier train d'engrenage pour inverser sélectivement les sens de rotation opposés de la première et de la seconde broche (17 et 35) pour tailler des courbes longitudinales de dents en forme d'épicycloïde et des sens de rotation identiques pour la première et la seconde broche (17 et 35) pour tailler des courbes longitudinales de dents en forme d'épicycloïde, et pour une excentricité maximale (Ex) donnée d'une machine à tailler les engrenages, on obtient des rayons de roues droites, maximum autorisés (Rm) ou des plages de travail de la machine à tailler les engrenages pour des roues dentées à denture en forme d'hypocycloïde comme des courbes longitudinales de dents en forme d'épicycloïde, selon la formule

$$R_m = r_w \cos \omega + \sqrt{E_x^2 - r_w^2 + (r_w \cos \omega)^2}$$

avec:
     $r_w$ = rayon de la tête porte-couteaux,
     $\beta_m$ = angle de la spirale,
     $\delta_w$ = angle d'orientation,

avec pour l'épicycloïde $\omega = 90° - \beta_m + \delta_w$, et pour l'hypocycloïde $\omega = 90° - \beta_m - \delta_w$, ainsi qu'un moyen d'entraînement auxiliaire (40) réversible relié au premier train d'engrenage directement et solidairement en rotation de la roue dentée (34) de la seconde broche (35) et entraînant celle-ci simultanément avec le moyen d'entraînement (10) pour serrer le premier train d'engrenage.

2. Machine à tailler les engrenages selon la revendication 1, caractérisée en ce que la transmission d'inversion (60) est situé au voisinage de la seconde broche (35).

3. Machine à tailler les engrenages selon la revendication 1, caractérisée en ce que les trains d'engrenage comportent un point de dérivation auquel est relié le moyen d'entraînement principal (10) et en ce que la première broche (17) est prévue à une extrémité du premier train d'engrenage, la seconde broche (35) étant prévue à l'autre extrémité de ce premier train d'engrenage.

4. Machine à tailler les engrenages selon la revendication 1, caractérisée en ce qu'en plus, elle comporte:
    – un tambour de roulement (55) associé à la première broche (17),
    – un second train d'engrenage qui relie le tambour de roulement (52) par l'intermédiaire d'une transmission de compensation (14) au premier train d'engrenage et transmet ainsi un mouvement de roulement combiné à la seconde broche (35) et un moyen d'entraînement de roulement réversible (51) qui est relié au second train d'engrenage pour mettre en œuvre sélectivement le mouvement de roulement.

5. Machine à tailler les engrenages selon la revendication 1 ou 4, caractérisée en ce que la transmission d'inversion (60) est montée pour les sens de rotation identiques de la première et de la seconde broche (17 et 35) et le moyen d'entraînement principal (10) et le moyen d'entraînement auxiliaire (40) entraînent le premier train d'engrenage dans un même sens de rotation pour tailler des courbes longitudinales de dents de forme hypocycloïdale.

6. Machine à tailler les engrenages selon la revendication 1 ou 4, caractérisée en ce que la transmission d'inversion (60) est montée pour assurer les sens de rotation identiques de la première et de la seconde broche (17 et 35) et le moyen d'entraînement principal (10) et le moyen d'entraînement auxiliaire (40) entraînent le premier train d'engrenage dans un sens de rotation opposé pour tailler des courbes longitudinales de dents de forme épicycloïdale.

## Claims

1. Gear-manufacturing machine for cutting spiral bevel gears and face gear couplings with cycloidal axial tooth curves according to the continuous-cutting process, incorporating a rotating first spindle (17) and a rotating second spindle (35) for clamping a cutter head (18) and a workpiece (36), each spindle having a torsionally strong gear wheel, a first train of gears connecting the first and the second spindle (17, 35) for continuous rotation of the first and the second spindle (17 and 35) and a reversible main drive (10), connected to the first train of gears for simultaneously driving the first and the second spindle (17 and 35), characterised by
– a reversing gear unit (60) in the first train of gears for switching, as required, to countercurrent directions of rotation of the first and the second spindle (17 and 35) for cutting epicycloidal axial tooth curves, and to co-current directions of rotation of the first and the second spindle (17 and 35) for cutting hypocycloidal axial tooth curves, whereby for a given maximum eccentricity distance (Ex) of a gear-manufacturing machine, greater maximum permissible crown gear radii (Rm), and hence operating ranges of the gear-manufacturing machine, result for gear wheels with hypocycloidal axial tooth curves than for gear wheels with epicycloidal axial tooth curves, in accordance with the following formula:

$$R_m = r_w \cos \omega + \sqrt{E_x^2 - r_w^2 + (r_w \cos \omega)^2}$$

wherein $r_w$ = cutter head radius,
$\beta_m$ = helix angle,
$\delta_w$ = angle of orientation,
where in the case of epicycloids $\omega = 90° - \beta_m + \delta_w$
and in the case of hypocycloids $\omega = 90° - \beta_m - \delta_w$,
and
– a reversible auxiliary drive (40), connected to the first train of gears directly at the torsionally strong gear wheel (34) of the second spindle (35) and driving the latter simultaneously with the main drive (10) for bracing the first train of gears.

2. Gear-manufacturing machine according to Claim 1, characterised by arranging the reversing gear unit (60) in the vicinity of the second spindle (35).

3. Gear-manufacturing machine according to Claim 1, characterised in that the first train of gears has a branching point at which the main drive (10) is connected, and in that the first spindle (17) is arranged at one end and the second spindle (35) at the other end of the first train of gears.

4. Gear-manufacturing machine according to Claim 1, incorporating the following additional features:

– a cradle (52), in which the first spindle (17) is arranged,
– a second train of gears which connects the cradle (52) to the first train of gears by means of a differential gear unit (41) and in this way transmits a superposed generating motion to the second spindle (35), and a reversible rolling contact drive (51), connected to the second train of gears for initiating the generating motion as required.

5. Gear-manufacturing machine according to Claim 1 or 4, characterised in that the reversing gear unit (60) is switched for the first and the second spindle (17 and 35) to run in co-current directions of rotation, and the main drive (10) and auxiliary drive (40) drive the first train of gears in the same direction of rotation for cutting hypocycloidal axial tooth curves.

6. Gear-manufacturing machine according to Claim 1 or 4, characterised in that the reversing gear unit (60) is switched for the first and the second spindle (17 and 35) to run in countercurrent directions of rotation, and the main drive (10) and auxiliary drive (40) drive the first train of gears in opposite directions of rotation for cutting epicycloidal axial tooth curves.

FIG. 1

FIG. 2

/1

FIG. 3